# EUROPEAN PATENT SPECIFICATION

(11) **EP 0 334 089 B1**
(45) Date of publication and mention of the grant of the patent: **15.09.1993**
(21) Application number: 89103878.8
(22) Date of filing: 06.03.1989
(51) Int. Cl.: A21C 3/02

(54) **Puff-pastry making machine**
Vorrichtung zur Herstellung von Blätterteig
Appareil pour la production de pâte feuilletée

(30) Priority: 17.03.1988 IT 4571088
(43) Date of publication of application: 27.09.1989
(73) Proprietor: Cimenti, Antonio, I-30027 San Dona' di Piave (Venezia) (IT)
(72) Inventor: Cimenti, Antonio, I-30027 San Dona' di Piave (Venezia) (IT)
(74) Representative: Da Riva, Ermanno

(56) References cited:
- EP-A- 0 069 078
- FR-A- 2 303 478
- US-A- 4 375 349
- US-A- 4 636 164

## Description

The present invention relates to a puff-pastry making machine, able to make alimentary puff-pastry with a substantially rectangular or discoidal shape, such machine being particularly utilizable for middle and small productions thereof.

Commonly so-called puff-pastry making machines employed for different uses, such as i.e, for confectionery, bakery, pizzas production etc, are well known.

Such machines are of several kinds and particularly different machines have been designed for pizzas production, which machines are provided usually with reduced sizes for making circular shaped puff-pastry.

On the contrary, machines for making rectangular puff-mastry have been realized and are usually utilized, which however generally have considerable sizes and therefore high weight, which fact males them very cumbersome and practically irremovable, so that they are used mainly for uses involving high productive capacities only.

At the present time, some kinds of small-sized machines for making alimentary puff-pastry with an almost circular (discoidal) final shape are known, which machines, as it is also known, are employed particularly for pizzas production.

Such machines, as for instance those described by the Swiss patent 289367, by the U.S. patents 1871753, 2707924, 3792948 and 3883283, by the French patents 7617715 and 7507516 as well as by the Italian patent applications 83639 A/77 and 83410 A/81 and other ones, all provide devices adapted to rotate the formed dough while leaving a first lamination unit, so as it is submitted in a subsequent lamination unit to a lamination step, which occurs in a direction orthogonal to the previous one.

Document US-A- 4,636,164, which discloses the preamble of claim 1, describes a machine for transforming a piece of dough of globoidal form into a substantially circular puff-pastry.

The machine includes a feedbox and two pairs of lamination rolls disposed below the feedbox respectively at the upper end portion and lower end portion of an inclined shelf. The dough which is released from the first pair of rolls meets a first oscillating arm which in turn is pivoted on the structure of the machine.

Said oscillating arms include adjustable counterweights for bringing said first and second oscillating arms back to their respective starting positions.

The dough which is released from the first roll train progressively pushes both the oscillating arms downward till the second oscillating arm meets an adjustable stopping element.

At the stopping of the second oscillating arm, the first oscillating arm rotates around its pivot.

At the same time the dough is induced to rotate through a substantially orthogonal angle with respect to the direction of the first lamination operation and finally completely released into the second roll train.

It must be pointed out that the optimum working of the machine needs continuous adjustments of the counterweights of both the oscillating arms and continuous adjustments of the stopping elements of the second oscillating arm in order to obtain an optimal operation even with variable sizes of the dough and to avoid dead center positions of the first oscillating arm.

Therefore, such adjustments must be carried out by engineers in order to avoid improper functionings or the block of the machine.

If such adjustments are not carried out, even small variations of the point in which the dough is introduced into the first roll train or variations of the weight or of the diameter of the dough discharged from the first pair of rolls produce an incorrect rotation of the dough and thus an inaccurate introduction of the dough into the second pair of rolls.

If the above described conditions happen the drough released from the second pair of rolls will not be provided with the wanted circular shape but with different and undesired ones.

Therefore, it would be useful and convenient to realize a machine having small overall dimensions, with low power, structurally simple, reliable and cheap as well in order to obtain both rectangular and discoidal shaped puff-pastry. Moreover, it would be important to realize a machine which does not need continuous adjustments by engineers and which assures a correct and uniform operation of the transfer device of the puff-pastry even with variations of the physical features of the dough introduced into the machine.

The puff-pastry machine according to the invention is comprising in a per se known manner, a support structure on which are fixed two pairs of laminations rolls disposed in a horizontal and reciprocally parallel position, said lamination rolls are reciprocally interconnected in a kinematic manner, driven into rotation by a motor and provided with means suitable to change the reciprocal distance between the associated rolls, said two pairs of lamination rolls are respectively arranged at the upper and lower ends of a first inclined shelf suitable to receive the puff-pastry which is released from the upper pair or rolls and to support slidably the same puff-pastry towards the said lower pair of rolls, above the upper pair of rolls being disposed a loading unit formed by a loading shelf disposed longitudinally adjacent to the lower roll of said upper pair of lamination rolls and provided with two side walls orthogonal thereto, at least one of which is longitudinally translatable as well as removably connectable thereto, in order to adjust the desired width of puff-pastry to be laminated, said machine being also provided with an arcuate arm disposed on the upper surface of the first inclined shelf and below the upper pair of lamination rolls, which arcuate arm is suitable to receive the formed puff-pastry leaving the upper pair of rolls, to move downwardly and, at the same time, to rotate about its nearest end to the lateral edge of the first inclined shelf in order to accompany the puff-pastry along said first inclined shelf and to release the puff-pastry at the inlet of said lower pair of lamination rolls rotated in such a manner that said puff-pastry may be subjected thereby to a second lamination operation in an orthogonal direction with respect to the previous direction of lamination so as to obtain a final puff-pastry with a substantially discoidal form, said arcuate arm is pivoted at an end portion thereof, by means of a first stud, to a first end portion of an oscillating arm pivoted at an intermediate position thereof, by means of a second stud positioned between said pairs of lamination rolls, to a second inclined shelf underlying said first inclined shelf, the free end portion of the oscillating arm being provided with an adjustable counterweight for bringing said arms back to the respective starting positions thereof, said arm being also able to be positioned out of the path of the formed puff-pastry along said first inclined shelf as well as fixed at this position by a suitable locking means, so as to obtain final puff-pastry with substantially rectangular form, characterized in that said end portions of said arcuate and oscillating arms, reciprocally pivoted at the first stud, are connected to the underlying second inclined shelf by means of an arm extending from a point on said arcuate arm near the end thereof pivoted on the first stud, downwardly towards the lower edge of said first inclined shelf, and outwardly inclined from the lateral edge thereof, said arm being pivoted at its free end, with a further, third, stud, on the free end of an additional arm, in turn pivoted at its other end on a fixed fourth stud connected to said second inclined shelf near the lower pair of lamination rolls, said arms and said studs forming, in cooperation with the oscillating arm and with the second stud, a kinematic device having two fixed points and two movable points.

The puff-pastry making machine referred to will be hereinafter described in detail, in order to better understand the features and advantages attainable therefrom, in a preferred embodiment thereof given by way of a not limitative example only and with reference to the accompanying drawings in which;
- fig. 1 shows a perspective view of the puff-pastry making machine referred to;
- fig. 2 shows a front view, taken on a plane parallel to the inclined plane of the machine, of the same machine in its completeness and shows the detailed operation of the device for obtaining discoidal shaped puff-pastry;

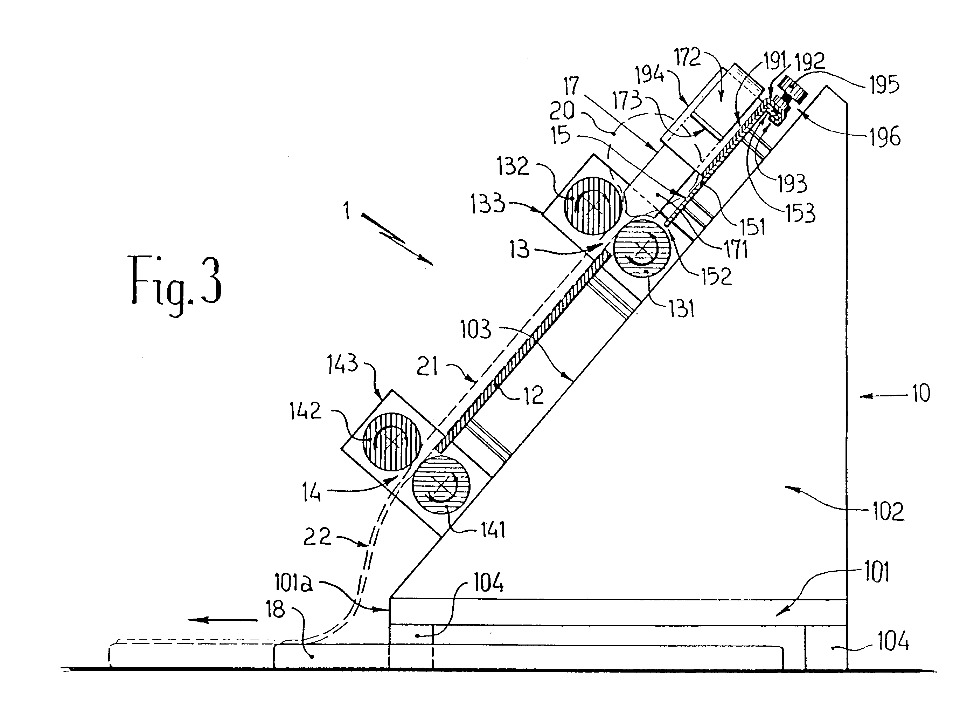

- fig. 3 schematically illustrates the machine in a partially cut side view, for clearness the part thereof only utilized for obtaining rectangular shaped puff-pastry. Referring to these figures in which the common items are marked with the same reference numerals, it is noted that the puff-pastry making machine 1 referred to is constituted by a structure 10 made of a base shelf 101, at the upper, part of which an envelope 102 is disposed which terminates in its front part with an inclined shelf 103, extended from the front edge 101 a of said base shelf 101, inclined towards the upper-rear part of said support structure 10 and forming always with said base shelf 101, an angle preferably of about 45°-60°.

Further, said support structure 10 is adequately spaced from the support plane by means of suitable feet 104 connected to the corners of the lower side of said base shelf 101, for the purpose set forth below.

A pair of upper lamination rolls 13 and a pair of lower lamination rolls 14, respectively constituted by the lower rolls 131 and 141 and by the upper rolls 132 and 142, are respectively arranged horizontally near the upper part and the lower part of said inclined sheld 103.

The rolls 131-132 and the rolls 141-142 respectively of the upper 13 and lower pair 14 of lamination rolls are laterally supported, at their ends, respectively on the left side of the side supports 133 and 143 and on the right side of the side supports 134 and 144.

The right side supports 134 and 144 are also provided with associated regulating devices 135 and 145 of per se known kind, able to change the reciprocal distance between the rolls of the respective pairs of lamination rolls 131-132 and 141-142, which also will be interconnected and commanded in rotation by means of kinematic devices and moving means (geared motor) also of per se known kind, disposed below said inclined shelf 103 and contained into the envelope 102.

Moreover, an inclined shelf 12 is disposed between the upper 13 and the lower pair 14 of lamination rolls, which shelf is tangent with its front upper side to the lower rolls 131 and 141 thereof, as well as is parallel to the underlying inclined shelf 103 on which it is adequately connected.

At the upper part of the upper pair 13 of lamination rolls a loading shelf 15 is provided, which is situated in a plane substantially parallel to said inclined shelf 12 as well as is shifted towards the underlying inclined shelf 103 on which it is adequately connected too,
Such loading shelf 15 is constituted by a band 151 made of suitable sheet, transversally arranged to the machine and whose front edge 152 skims the lower roll 131 of said upper pair 13 of lamination rolls, while the rear edge thereof is so folded as to form a guide member 153 for the reasons set forth below.

Besides, a short portion of the left side end of said band 151 is folded orthogonally upwards so as to form a first fixed side wall 16 and a slider 19 is fitted along the band 151, slidably laid thereupon, which slider is constituted by a rectangular plate 191 whose upper edge is folded orthogonally downwards for a short portion 192 thereof, and terminates at its end with a further "U" folded portion 193, so as to form altogether a slide which can slidably angage said guide member 153.

On the contrary, the left side edge of said rectangular plate 191 is folded orthogonally upwards for a short portion thereof, so as to form a support wall 194 to which an additional plate 171 shaped as it will be further described and constituting practically a second movable side wall 17 can be removably fitted.

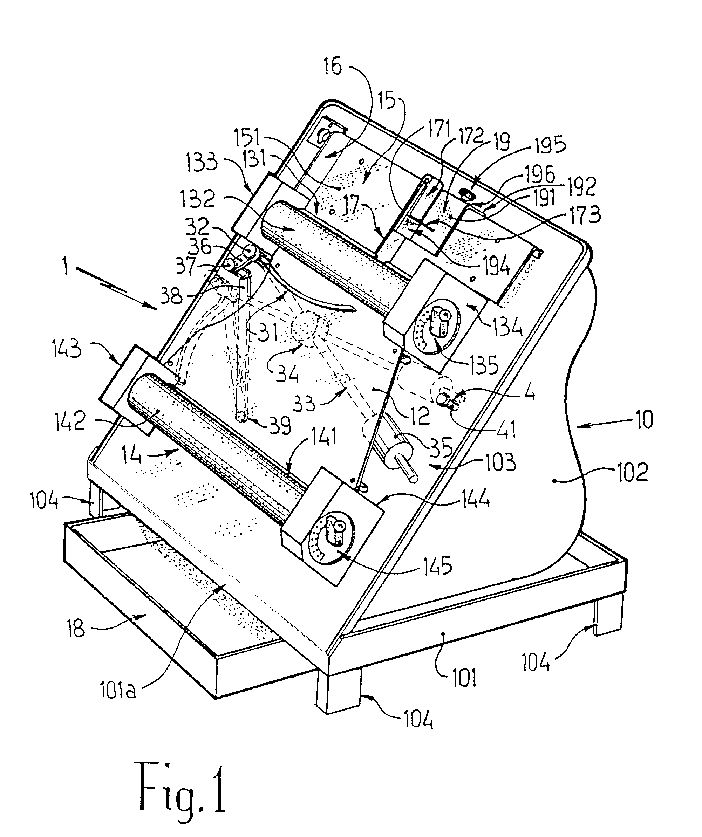

As it is pointed out particularly from fig. 1, such plate 171 is constituted by a foil whose front end is shaped with two radiused side notches which follow the curvature of the lamination rolls 131 and 132, near which such end is positioned.

On the contrary, the opposite end thereof is "U" folded with a portion 172 thereof, so as to form a resiliently deformable part adapted to permit said plate 171 to be removably fitted on the support plate 194.

Further, a short portion 173 of the end of said "U" folded partion is additionally folded orthogonally outwards, so as to form a catch element permitting the operator to adequately fit thereto and/or remove therefrom as well as position said plate 171 with respect thereto.

In addition, a simple clamp 196 is disposed on said short folded portion 192 of said slider 19, which screw clamp is operable from the associated konb 195, permitting said slider 19 to be fixed to the loading shelf 15.

A movable shelf 18, which may be constituted by a simple plate made of an adequate material or by a pan or the like, is put into a space provided beneath the base shelf 101 and determined by the feet 104, which movable shelf 18 will be arranged adequately projected from the front part of the puff-pastry making machine 1, for the reasons hereinafter described.

Hitherto, a sole part of the machine permitting to obtain final puff-pastry with substantially rectangular form has been described, however the machine also comprises a suitable kinematic device which is easily connectable therein and disconnectable therefrom and allows also puff-pastry with circular shape, which as it is known, may be particularly utilized for producing "pizzas", to be obtained.

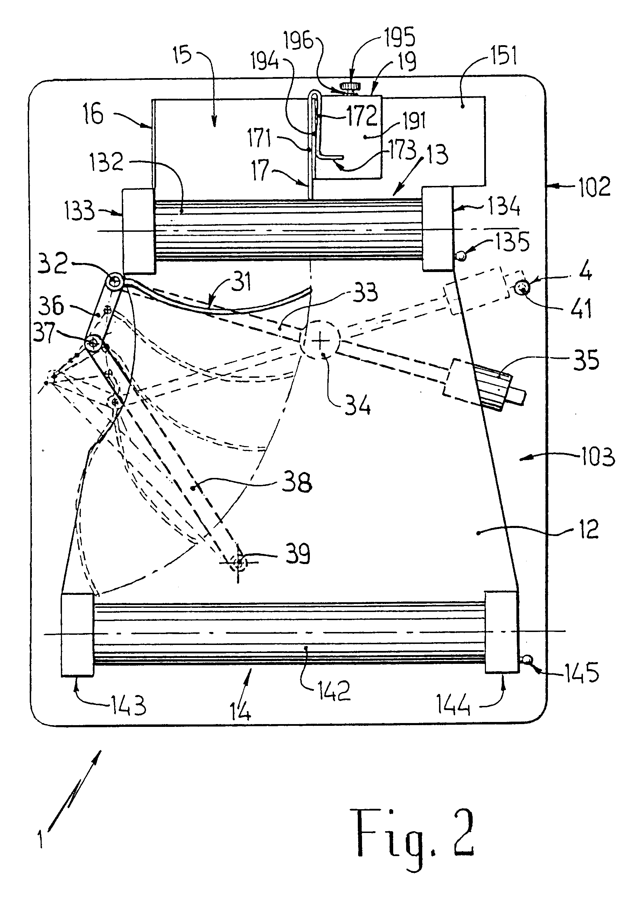

As pointed out from fig. 1 and more clearly particularly from fig. 2, such device is composed by an arcuate arm 31 which, when the device is connected, is positioned near the outlet side of the first pair 13 of lamination rolls, with its concave part facing thereof as well as is disposed adjacent to the upper surface of the inclined shelf 12, Besides, such arcuate arm 31 is pivoted at its left end to the stud 32 provided on the correspondent free end of an oscillating arm 33, pivoted at its centre to the stud 34 connected to the inclined shelf 103 and counterweighed at the other free end thereof by an adjustable counterweight 35.

Moreover, the kinematic device comprises an arm 36 extending almost orthogonally to the arcuate arm 31 and having a first end portion rigidly connected with the end portion of the arcuate arm 31 which is reciprocally pivoted with the end portion of the oscillating arm 33.

The second end portion of said arm 36 is rotatably pivoted, by means of a stud 37, to the end portion of a further arm 38 having the other end portion rotatably connected, by means of a fixed stud 39, to said inclined shelf 103 near the lower pair 14 of lamination rolls.

The above described components 36,37,38,39 are forming, together with the oscillating arm 33 and with its stud 34, a kinematic device with two fixed points 34,39 and two movable paints 32,37.

Except the arcuate arm 31 which is arranged on the upper part of the inclined shelf 12, all the other elements of the device referred to are positioned between such inclined shelf 12 and the underlaying shelf 103.

As it is clearly pointed out from fig. 2, said arcuate arm 31 can be moved from the start position thereof, in which the same and the elements of the associated kinematic device providing for shifting thereof are indicated by a marked line (and by a marked dotted line at the part below the inclined shelf 12), to the final position thereof indicated by a thin dotted line.

For a better clearness, any intermediate positions are always indicated by a thin dotted line.

At its start position, said arcuate arm 31 is disposed substantially parallel to the upper pair 13 of lamination rolls.

Successively, the puff-pastry released from the first pair 13 of lamination rolls meets the arcuate arm 31 and progressively pushes it downward, causing simultaneously the oscillating arm 33 and the arms 36 and 38 to be rotated, till to its final position in which the arm 31 is disposed substantially orthogonal with respect to its starting position.

It is pointed out that in such final position said arcuate arm 31 is clearly positioned totally out of the path of the formed puff-pastry leaving the upper pair 13 of lamination rolls, at the first lamination operation thereof, so that the machine may be employed for manufacturing rectangular shaped puff-pastry.

A suitable locking means 4 is accordingly provided for locking such arcuate arm 31 in this position.

Such locking means 4 could be constituted, as illustrated by way of example, by an extractable pin 41 and the use thereof is obvious and very simple.

In fact, it is sufficient to shift the end of the oscillating arm 33 provided with the counterweight 35 upwards, in a manner that it passes said extractable pin 41 and therefter to extract such pin 41 therefrom, so that such end is locked and therefore said arcuate arm 31 as well.

As the machine has been operated as described, the same may be utilized only far obtaining puff-pastry with substantially rectangular form and in such case it operates in the following way: depending an the thickness of the puff-pastry to be obtained there are regulated, by means of the adjusting means 135 and 145, the reciprocal distances between the lamination rolls 131-132 and 141-142 and depending on the width of the desired band of puff-pastry it is positioned the slider 19 while locking it with the screw clamp 196, thus providing the positioning of the movable side wall 17 with respect to the fixed wall 16 and therefore the width of the space for loading the puff-pastry to be laminated.

Then the machine is started in operation so as the rolls 131-132 and 141-142 of the upper 13 and lower pair 14 of lamination rolls are entrained in rotation in the direction indicated by the arrows shown in fig. 3.

At this point, into the loading space determined by the loading shelf 15 and the side walls 16 and 17, it is introduced an adequate part of the cylindric shaped puff-pastry, preconfectioned in a conventional way, which is indicated far clearness with dashed line and the reference numeral 20 in fig. 3.

Thus, such part of puff-pastry 20 is seized by the upper pair 13 of lamination rolls which laminates it while forming, at the outlet side thereof, a sheet with sufficient thickness (which sheet is indicated, always in fig. 3, by a dashed line and is marked by the reference numeral 21), which slides along the inclined shelf 12 and then penetrates into the the lower pair 14 of lamination rolls, where it is saubmitted to a further lamination operation and finally leaves thereof in the form of a band of puff-pastry with the desired thickness (indicated in fig. 3 by a dashed line as well as marked by the reference numeral 22).

The so obtained band of puff-pastry 22 is stored on the movable shelf 18 (pan or the like) and the operator drags forward the whole progressively, by holding such movable shelf 18 and in case also the corners of the initial edge of said band of puff-pastry 22.

Thus, an even and regular storage of the band of puff-pastry 22 on said movable shelf 18 is obtained.

When the storage is ended, the operator cuts with a suitable utensil (knife or the like) the band of puff-pastry 22 along the rear edge of the movable shelf 18, and the so obtained rectangular shaped part of puff-pastry is ready far the subsequent use thereof.

It is pointed out that the arrangement of the side walls 16 and 17 providing far the width of the loading space gives rise to a controlled and well laterally delimited feeding permitting a band of puff-pastry with very regular side edges to be obtained.

On the contrary, for using the machine for manufacturing puff-pastry with discoidal form, it is enough to disconnect the locking means 4 so releasing the kinematic device which controls the movement of said arcuate arm 31, so that the latter arranges itself transversally to the outlet side of the upper pair 13 of lamination rolls, as illustrated by fig. 2.

Thereafter, the slider 19 is so shifted as the movable side wail 17 is appropriately positioned depending on the employed amount of puff-pastry and, as in the previous case, the adjustments of the reciprocal distances between the lamination rolls 131-132 and 141-142 are effected.

Therefore, when the operation of the machine is started, a suitable part of puff-pastry 20 which in this case has preferably a globoidal (spherical) form is introduced into the loading space thereof.

The front side of the puff-pastry while leaving the upper pair 13 of lamination rolls, which in this case is arcuate, impacts against the concave side of said arcuate arm 31, (see fig. 2) thus causing the latter to be shifted downwards and also rotated clockwise around the stud 32 as seen from the front side of the machine.

At the same time, the oscillating arm 33 rotates anticlockwise around the stud 34, the arm 36, rigidly connected with the arcuate arm 31, rotates clockwise as seen from the front side of the machine around the stud 37 and the arm 38 rotates anticlockwise as seen from the front side of the machine, around the stud 39 assuming the various positions indicated by a dotted line in the figure 2.

The final position of the arcuate arm 31 is substantially orthogonal with respect its start position.

In this way, the substantially elliptic puff-pastry formed into the upper pair of lamination rolls 13 is stored at the inlet side of the subsequent lower pair 14 of lamination rolls, at a position in which it is rotated orthogonally with respect to the direction of the first lamination operation.

Thus, the second lamination operation is also effected in a direction orthogonal to the direction of the first one and the end formed puff-pastry leaving such lower pair 14 of lamination rolls is of substantially discoidal form.

From what it has been described there appear evident the advantages attainable with the puff-pastry making machine referred to.

Moreover, the machine, according to the invention, allows to obtain both rectangularly and discoidally shaped puff-pastry and to vary widely the sizes of the wanted puff-pastry.

Finally, the machine, according to the invention, has small overall dimensions and its weight is reduced in such a way that the machine results particularly helpful for the middle and small productions of puff-pastry.

It is well understood that different variants may be brought to the machine referred to, however without departing from what it has been described and hereinafter claimed with reference to the accompanying drawings, and therefore from the protection field of the present industrial invention.

## Claims

1. Puff-pastry making machine comprising, in a per se known manner, a support structure (10) an which are fixed two pairs of lamination rolls (13-14) disposed in a horizontal and reciprocally parallel position, said lamination rolls (13-14) being reciprocally interconnected in a kinematic manner, driven into rotation by a motor and provided with means (135-145) suitable to change the reciprocal distance between the associated rolls, said two pairs of lamination rolls (13-14) being respectively arranged at the upper and lower ends of a first inclined shelf (12) suitable to receive the puff-pastry which is released from the upper pair (13) of rolls and to support slidably the same puff-pastry towards the said lower pair (14) of rolls, above the upper pair (13) of rolls there being disposed a loading unit formed by a loading shelf (15) disposed longitudinally adjacent to the lower roll (131) of said upper pair (13) of lamination rolls and provided with two side walls (16-17) orthogonal thereto, at least one of which (17) is longitudinally translatable as well as removably connectable (195) thereto, in order to adjust the desired width of puff-pastry (20) to be laminated, said machine being also provided with an arcuate arm (31) disposed on the upper surface of the first inclined shelf (12) and below the upper pair (13) of lamination rolls, which arcuate arm (31) is suitable to receive the formed puff-pastry leaving the upper pair (13) of rolls, to move downwardly and, at the same time, to rotate about its nearest end to the lateral edge of the first inclined shelf (12) in order to accompany the puff-pastry along said first inclined shelf (12) and to release the puff-pastry at the inlet of said lower pair (14) of lamination rolls rotated in such a manner that said puff-pastry may be subjected thereby to a second lamination operation in an orthogonal direction with respect to the previous direction of lamination, so as to obtain a final puff-pastry with a substantially discoidal form, said arcuate arm (31) being pivoted at an end portion thereof, by means of a first stud (32), to a first end portion of an oscillating arm (33) pivoted at an intermediate position thereof, by means of a second stud (34) positioned between said pairs (13-14) of lamination rolls, to a second inclined shelf (103) underlying said first inclined shelf (12), the free end portion of the oscillating arm (33) being provided with an adjustable counterweight (35) far bringing said arms (31-33) back to the respective starting positions thereof, said arm (31) being also able to be positioned out of the path of the formed puff-pastry along said first inclined shelf (12) as well as fixed at this position by a suitable locking means (4), so as to obtain final puff-pastry with substantially rectangular form, characterized in that said end portions of said arcuate and oscillating arms (31-33), reciprocally pivoted at first stud (32), are connected to the underlying second inclined shelf (103) by means of an arm (36) extending from a point on said arcuate arm (31) near the end thereof that is pivoted on first stud (32), downwardly towards the lower edge of said first inclined shelf (12), and outwardly inclined from the lateral edge thereof, said arm (36) being pivoted at its free end, with a third stud (37), on the free end of an additional arm (38), in turn pivoted at its other end on a fixed fourth stud (39) connected to said second inclined shelf (103) near the lower pair (14) of lamination rolls, said arms (36-38) and said studs (37-39) forming, in cooperation with the oscillating arm (33) and with the second stud (34), a kinematic device having two fixed points (34,39) and two movable points (32,37).

## Patentansprüche

1. Blätterteigmaschine die eine Trägestruktur (10) behaltet , in der zwei Paar Walzrollen (13-14) waagerecht und zwischen sich parallel angeordnet befestigt sind, wobei die genannte Walzrollen (13-14) zwischen sich kinematisch zusammenverbunden und von einem Motor in Rotation gesteuert und mit Mitteln (135-145) um die reziproke Entfernung zwischen die verbundenen Rollen zu variieren versehen sind, und da die genannte zwei Paar Walzrollen (13-14) respektiv an das untere und obere Ende einer schiefen Rutschbahn (12) angeördnet sind, ist diese schiefe Ebene für das Bekommen des losgelassenen Teigförmchens vom oberen Paar Rollen (13) geeinigt und für das fließend Bringen dieses Förmchens zur unteren Paar Rollen (14), da es über das obere Paar Rollen (13) eine Beschickungsvarrichtung (15) gibt die aus einer langitudinalen Rutschbahn (15) besteht, wo diese an die untere Rolle (131) des bekannten oberen Paares (13) angrenzt und sie mit zwei Seitenwänden (16-17) versehen ist, die orthogonal zu dieser stehen, wovon einer (17) longitudinal verschiebbar sowie entferlich befestbar zu dieser ist um die gewünschte Breite des Förmchens (20) das gewalzt sein muß zu regulieren, und außerdem ist die Maschine mit einem gebagenen Arm (31) versehen, der auf der Oberfläche der ersten Rutschbahn (12) und unten des oberen Paar (13) Walzrollen geördnet ist, wobei genannter Arm (31) geignet ist das Förmchen zu bekommen das vom oberen Rollenpaar (13) gelassen wird, Richtung unten bringen und, gleichzeitig, um seinen äußersten Punkt nächst zur seitigen Rand der ersten schiefen Rutschbahn (12) drehen mit dem Zweck das Förmchen längs der erwähnten ersten Rutschbahn (12) zu begleiten und es am Eintritt des unteren Paares (14) zu lassen, in so eine Weise gedreht daß dieses Förmchen zu einem zweiten Walzen in Orthogonalrichtung vergliechen mit der vorigen Walzrichtung unterstellen zu können, so daß am Ende einen runden Blätterteig erhalten wird, weil dieser gebogene Arm (31) an ein seines Endes mittels eines ersten Stiftes (32) zu einem ersten Ende eines schwingenden Armes (33) in einen dazwischenliegenden Punkt verbolzt, verbolzt ist, durch einen zweiten Bolzen (34) zwischen den schon genannten Paaren Walzrollen(13-14) positioniert, zu einer zweiten schiefen Rutschbahn (103) die unten der ersten (12) steht, die freie Extremität des schwingenden Arm (33) ist mit einem regulierbaren Ausgleichsgewicht (35) versehen um genannte Arme (31-33) zu der respektiven Anfangspositionen zu bringen, weil außerdem ist dieser Arm (31) fähig, äußerlich zu der Strecke des Förmchens längs der ersten schiefen Rutschbahn (12) ,positioniert zu sein so wie in solcher Position mit einem geeigneten Blockwerk (4) befestigt, so daß man fertigen Blätterteige mit wesentlich rechteckischer Form bekommt, das ist charakterisiert von der Tatsache daß diese Ende von den Armen , gebogen und scwingend (31-33), gegenseitig am ersten Bolzen gebolzt(32), sind zu der unteren schiefen Rutschbahn (103) mittels eines Armes (36) verbunden, solcher Arm von einem Punkt dieses gebogenen Armes (31) nah von deren Extremität am ersten Bolzen (32) gebolzt gehend, Richtung unten und den unteren Rand des ersten schiefen Rutschbahn (12) und schief nach Außen vom seitigen Rand dieses letzte Armes (36) an das freie Ende durch einen dritten Bolzen (37) an das freie Extremität eines weiteren Armes (38) gebolzt ist, seinerseits an das andere seiner Extremität an einen vierten festen Bolzen (39 gebolzt und dieser Bolzen an die zweite schiefe Rutschbahn (103) in der Nähe des unteren Paares (14) Walzrollen befestigt, diese Arme (36-38-) und diese Bolzen (37-39) bilden in einer Zusammenarbeit mit dem schwingenden Arm (33) und mit dem zweiten Bolzen (34) eine kinematische Vorrichtung mit zwei festen (34-39) und zwei mobilen Punkten (32-37).

## Revendications

1. Dérouleuse pour pâtes alimentaires, comprenant de facon connue, une structure de support (10) sur laquelle sont montées deux couples de rouleaux de laminage (13,14) disposés horizontalement et paralléles entre elles, les rouleaux (13,14) résultant cinématiquement connectés entre eux, commandés en rotation par un moteur et pourvus de moyens (135,145) aptes à varier la distance réciproque entre rouleaux associés, les deux couples de rouleaux de laminage (13,14) étant placées respectivement aux extremités supérieure et inférieure d'un premier plan incline (12) apte à recevoir le morceau de pâtes relachè par le couple supérieur de rouleaux (13) et à supporter sa coulée vers la paire inférieure de rouleaux (14), au dessus du couple de rouleaux supérieur (13) se trouve un élement de chargement formé par un plan de chargement (15) disposé longitudinalement adjacent au rouleau inférieur (131) du couple supérieur de rouleaux (13) de laminage et pourvu de deux parois laterales (16,17) orthogonales au rouleau (131) dont au moins une (17) déplaceable longitudinalement ainsi que fixable amoviblement au même avec le but de régler la largeur désirée du morceau de pâtes à laminer (20), la machine étant aussi pourvue d'un bras arqué (31) disposé sur la surface supérieure du premier plan incliné (12) et au dessus du couple supérieur (13) de rouleaux de laminage; ledit bras arqué (31) étant apte à recevoir le morceau de pâtes relâché par le couple de rouleaux supérieur (13), à le transferer vers le bas et en même temps à tourner autour de son extremité la plus proche au bord latéral du premier plan incliné (12) et à le relacher à l'entrée du couple de rouleaux inférieur (14); roulé de facon à ce que le morceau de pâtes puisse être soumis à un deuxiéme laminage dans un sens orthogonal par rapport à la direction de laminage précedente de facon à obtenir une pâte feuilletée finale de forme pratiquement discoidale, ledit bras arqué (31) étant pivoté à une de ses extremités au moyen d'un premier pivot (32) qui se trouve à une premiére extremité d'un bras oscillant (33) aussi pivoté en un point intermédiaire, au moyen d'un deuxiéme pivot (34) qui se trouve entre les deux couples de rouleaux de laminage (13,14), par rapport à un deuxiéme plan incliné (103) siuté au dessous du premier plan incliné (12), l'extremité libre du bras oscillant (33) étant pourvue d'un contrepoids (35) réglable afin de reconduire les bras (31,33) aux respectives postions initiales; ledit bras (31) résultant en outre apte à être placé externellement au parcours du morceau de pâtes de long du premier plan incliné (12) ainsi que fixé en telle position par un moyen de blocage approprié (4); de facon à obtenir des morceaux de pâtes finaux de forme pratiquement rectangulaire, l'ensemble étant caracterisé par le fait que le bras arqué et oscillant (31,33), réciproquement pivotés sur le premier pivot (32), sont joints au deuxiéme plan incliné (103) au moyen d'un bras (36) qui s'étend, d'un point sur le bras arqué (31) prés de l'extremité du même qui se trouve pivoté sur le premier pivot (32), ver le bas et vers le bord inférieur du premier plan incliné (12) et incliné vers l'extérieur du bord latéral de ce dernier, ledit bras (36) étant pivoté en son extremité libre au moyen d'un troisiémé pivot (37), sur l'extremité libre d'un ulterieur bras (38), pivoté soi même à son autre extremité sur un quatriéme pivot fixe (39), fixè au deuxiéme plan incliné (103) en proximité du couple inférieur de rouleaux de laminage (14); lesdits bras (36,38) et pivots (37,39) forment, en cooperation avec le deuxième pivot (34), un dispositif cinématique ayant deux points fixes (34,39) et deux points mobiles (32,37).
